# EUROPEAN PATENT APPLICATION

(11) **EP 4 817 937 A1**
(43) Date of publication of application: **07.10.2026**
(21) Application number: 24896414.0
(22) Date of filing: 21.11.2024
(51) Int. Cl.: B60L 53/10

(54) **CHARGING CIRCUIT AND VEHICLE**

(30) Priority: 30.11.2023 CN 202311637460
(71) Applicant: BYD Company Limited, Shenzhen, Guangdong 518118 (CN)
(72) Inventor: GAO, Wen, Shenzhen, Guangdong 518118 (CN); SUN, Zhengyang, Shenzhen, Guangdong 518118 (CN); LI, Tao, Shenzhen, Guangdong 518118 (CN); ZHOU, Qiang, Shenzhen, Guangdong 518118 (CN)
(74) Representative: Mathys & Squire
(86) International application number: PCT/CN2024/133641
(87) International publication number: WO 2025/113323

(57) **Abstract**

A vehicle, comprising a charging circuit; the charging circuit comprises a power battery, a charging interface, and at least one inductor, where the power battery, the at least one inductor, and the charging interface are sequentially connected; the charging interface is used for connecting to a charging connector capacitor; and the power battery is adapted for implementing pre-charging on the charging connector capacitor by means of the at least one inductor.

## Description

### CROSS-REFERENCE TO RELATED APPLICATIONS

The present disclosure claims priority to Chinese Patent Application No. 202311637460.0 filed with the China National Intellectual Property Administration on November 30, 2023, titled "CHARGING CIRCUIT AND VEHICLE", which is incorporated herein by reference in its entirety.

### FIELD

The present disclosure relates to the technical field of battery charging, and particularly to a charging circuit and a vehicle.

### BACKGROUND

In the related art, when a charging gun is used to charge a vehicle, if the charging gun is directly connected to the vehicle for charging, the circuit elements (for example, power batteries) may be overloaded and damaged due to factors such as voltage surges or current peaks at current startup.

### SUMMARY

An object of the present disclosure is to provide a charging circuit and a vehicle for solving problems in the related art.

In order to achieve the above object, a first aspect of an embodiment of the present disclosure provides a charging circuit. The charging circuit includes a power battery, a charging interface, and at least one inductor, and the power battery, the at least one inductor, and the charging interface are sequentially connected.

The charging interface is configured to connect to the charging gun capacitor.

The power battery is adapted to pre-charge the charging gun capacitor through at least one inductor.

In an embodiment, the charging circuit further includes at least one switch unit. The power battery, the at least one inductor, the at least one switch unit and the charging interface are sequentially connected. The power battery is adapted to pre-charge the charging gun capacitor through at least one inductor and at least one switch unit.

In an embodiment, the at least one switch unit includes an N-phase bridge arm, and the at least one inductor includes an N-phase winding in a one-to-one correspondence with the N-phase bridge arm, and each phase winding is connected to the midpoint of the corresponding bridge arm, and N ≥ 1.

The positive electrode of the power battery is connected to a first bus terminal of the N-phase bridge arm, the first bus terminal is connected to the charging interface, and the negative electrode of the power battery is connected to a second bus terminal of the N-phase bridge arm.

The charging interface is also connected to the midpoint of any bridge arm.

In an embodiment, the charging interface includes a positive electrode interface and a negative electrode interface.

The positive electrode interface is connected to the first bus terminal, and the positive electrode interface is configured to connect to the first terminal of the charging gun capacitor.

The negative electrode interface is connected to the midpoint of any bridge arm, and the negative electrode interface is configured to connect to the second terminal of the charging gun capacitor. In an embodiment, the charging circuit further includes:
a controller, and the controller is connected to the N-phase bridge arm.

The controller is configured to control the N-phase bridge arm, so that the power battery charges the charging gun capacitor through the N-phase winding and the N-phase bridge arm in a step-down mode.

In an embodiment, the N-phase bridge arm is a three-phase bridge arm and the N-phase winding is a three-phase winding.

The controller is configured to control the three-phase bridge arm to cyclically be in a first state, a second state, a third state, and a fourth state in sequence, so that the power battery charges the charging gun capacitor in a step-down mode.

In the first state, the upper bridge arms in the three-phase bridge arm are all disconnected, the lower bridge arm in the bridge arm connected to the negative electrode interface is disconnected, one of the lower bridge arms in the bridge arm not connected to the negative electrode interface is conducting, and the other lower bridge arm in the bridge arm not connected to the negative electrode interface is disconnected.

In the second state, the upper bridge arms in the three-phase bridge arm are all disconnected, and the lower bridge arms in the three-phase bridge arm are all disconnected.

In the third state, the upper bridge arms in the three-phase bridge arm are all disconnected, the lower bridge arm in the bridge arm connected to the negative electrode interface is disconnected, and the lower bridge arms in the bridge arm not connected to the negative electrode interface are all conducting.

In the fourth state, the upper bridge arms in the three-phase bridge arm are all disconnected, and the lower bridge arms in the three-phase bridge arm are all disconnected.

In an embodiment, the controller is configured to:
control any lower bridge arm in the N-phase bridge arm to be conducting, so that the charging gun charges the power battery.

In an embodiment, the charging circuit further includes:
a bus capacitor, and one terminal of the bus capacitor is connected to the first bus terminal of the N-phase bridge arm, and a second terminal of the bus capacitor is connected to the second bus terminal of the N-phase bridge arm.

In an embodiment, the charging circuit further includes:
a switch, and the power battery is connected to the charging interface through the switch.

In an embodiment, the charging circuit further includes: a controller.

The controller is configured to control a battery cover driving device to drive a battery cover to cover the charging interface, when the switch is sintered. In an embodiment, the N-phase winding multiplexes a multiphase coil of the motor, and the N-phase bridge arm multiplexes the multiphase bridge arm of the motor controller.

In an embodiment, the motor includes a driving motor or an air-conditioning compressor, and the motor controller includes a motor controller corresponding to the driving motor, or a motor controller corresponding to the air-conditioning compressor.

According to a second aspect of the embodiment in the present disclosure, a vehicle is further provided. The vehicle includes the charging circuit according to any one of the first aspect of the embodiment in the present disclosure.

According to the above technical solution, the charging circuit includes a power battery, a charging interface and at least one inductor. The power battery, the at least one inductor and the charging interface are sequentially connected. The charging interface is configured to connect to the charging gun capacitor. The power battery pre-charges the charging gun capacitor through at least one inductor. The charging gun capacitor is pre-charged to give an initial voltage to the charging gun capacitor, which can reduce the voltage surges and current peaks when the charging is started and avoid the overload and damage of the circuit element so as to improve the reliability and service life of the charging circuit.

Other features and advantages of the present disclosure will be described in detail in the following detailed description section.

### BRIEF DESCRIPTION OF THE DRAWINGS

The accompanying drawings are provided to further understand the disclosure and form a part of the specification, used together with the following specific embodiments to explain the disclosure, but do not constitute a limitation of the disclosure. In the drawings:
FIG. 1 is a block diagram of a vehicle according to an embodiment of the disclosure.
FIG. 2 is a circuit diagram of a charging circuit according to an embodiment of the disclosure.
FIG. 3 is a circuit diagram of another charging circuit according to an embodiment of the disclosure.
FIG. 4 is a circuit diagram of another charging circuit according to an embodiment of the disclosure.
FIG. 5 is a circuit diagram of another charging circuit according to an embodiment of the disclosure.
FIG. 6 is a circuit diagram of another charging circuit according to an embodiment of the disclosure.
FIG. 7 is a circuit diagram of another charging circuit according to an embodiment of the disclosure.
FIG. 8 is a circuit diagram of another charging circuit according to an embodiment of the disclosure.

### Reference Numeral Explanation:

10-Vehicle; 20-Charging circuit; 11-Power battery; 12-N-phase bridge arm; 121-First bridge arm; 122-Second bridge arm; 123-Third bridge arm; 13-N-phase winding; 14-Positive electrode interface; 15-Negative electrode interface; 16-Inductor; 17-Charging interface; 18-Switch unit; 30-Battery cover; T1-First switch transistor; T2-Second switch transistor; T3-Third switch transistor; T4-Fourth switch transistor; T5-Fifth switch transistor; T6-Sixth switch transistor; K1-Switch; C1-Charging gun capacitor; C2-Bus capacitor.

### DETAILED DESCRIPTION

Hereinafter, specific embodiments of the present disclosure will be described in detail with reference to the accompanying drawings. It will be understood that the detailed description described herein is for illustration and explanation of the present disclosure only, and is not intended to limit the present disclosure.

The terms "first", "second", and the like used in the present disclosure are for distinguishing one element from another element, and are not sequential or important. Further, in the following description, when referring to the drawings, the same reference numerals in different drawings denote the same or similar elements unless otherwise explained.

With the continuous development of vehicle technology and the popularity of electric vehicles, DC fast charging technology of electric vehicles is becoming more and more common.

In the related art, when a charging gun charges a vehicle, if the charging gun is directly connected to the vehicle for charging, the circuit element (for example, power batteries) may be overloaded and damaged due to factors such as voltage surges or current peaks at current startup.

In order to solve the above technical problem, the charging circuit includes a power battery, a charging interface and at least one inductor. The power battery, the at least one inductor and the charging interface are sequentially connected. The charging interface is configured to connect to the charging gun capacitor. The power battery pre-charges the charging gun capacitor through at least one inductor. The charging gun capacitor is pre-charged to give an initial voltage to the charging gun capacitor, which can reduce the voltage surges and current peaks when the charging is started and avoid overload and damage of the circuit element so as to improve the reliability and service life of the charging circuit.

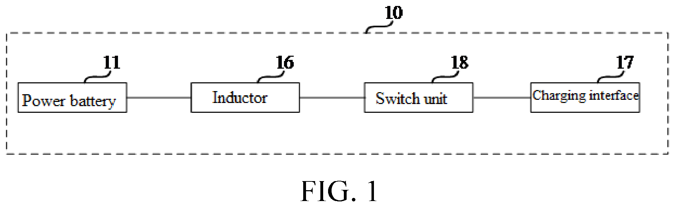

As shown in FIG. 1, the charging circuit includes a power battery 11, a charging interface 17, and at least one inductor 16. The power battery 11, the at least one inductor 16, and the charging interface 17 are sequentially connected.

The charging interface 17 is configured to connect to the charging gun capacitor.

The power battery 11 is adapted to pre-charge the charging gun capacitor through at least one inductor 16.

The charging gun capacitor is pre-charged to give an initial voltage to the charging gun capacitor, which can reduce the voltage surges and current peaks when the charging is started and avoid overload and damage of the circuit element so as to improve the reliability and service life of the charging circuit 20.

The circuit enables performing pre-charging relative to the pre-charging resistor, in the process of performing pre-charging by the inductor, a self-induction voltage is generated when the current changes, which counteracts the power supply voltage, so as to reduce the current during pre-charging, and generation of the self-induction voltage helps reduce the energy loss during pre-charging, and realizes more efficient energy transmission because of the characteristic of the inductance.

In an embodiment, the charging circuit further includes at least one switch unit 18. The power battery 11, the at least one inductor 16, the at least one switch unit 18 and the charging interface 17 are sequentially connected. The power battery 11 is adapted to pre-charge the charging gun capacitor through at least one inductor 16 and at least one switch unit 18.

By the arrangement of the switch unit 18, the start-stop control of the pre-charge is realized.

For example, the number of switch units 18 and the number of inductors 16 may be equal, and the switch units 18 can be connected in a one-to-one correspondence with the inductors 16.

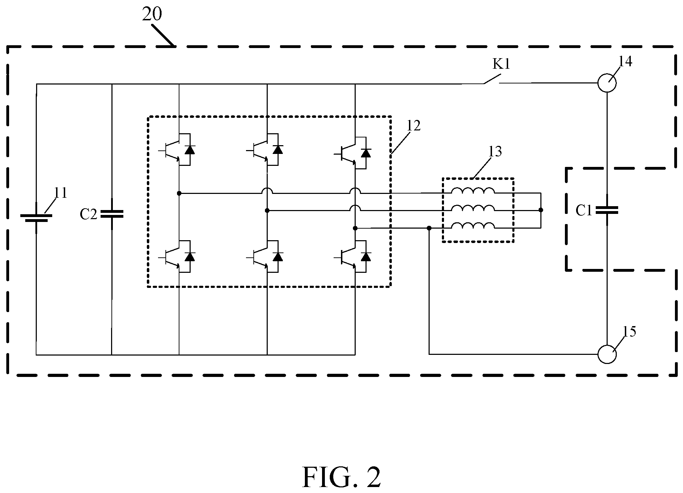

In an embodiment, referring to FIG. 2, FIG. 2 is a circuit diagram of a charging circuit 20 provided by an embodiment of the present disclosure. As shown in FIG. 2, at least one switch unit 18 includes an N-phase bridge arm 12, and at least one inductor 16 includes an N-phase winding 13 in a one-to-one correspondence with the N-phase bridge arm 12, and each phase winding is connected to the midpoint of the corresponding bridge arm, N ≥ 1, wherein N is a positive integer.

The positive electrode of the power battery 11 is connected to a first bus terminal of the N-phase bridge arm 12, the first bus terminal is connected to the charging interface 17, and the negative electrode of the power battery 11 is connected to a second bus terminal of the N-phase bridge arm 12.

The charging interface 17 is also connected to the midpoint of any bridge arm.

In an embodiment, the charging interface 17 includes a positive electrode interface 14 and a negative electrode interface 15.

The positive electrode interface 14 is connected to the first bus terminal, and the positive electrode interface 14 is configured to connect to the first terminal of the charging gun capacitor C1.

The negative electrode interface 15 is connected to the midpoint of any bridge arm, and the negative electrode interface 15 is configured to connect to the second terminal of the charging gun capacitor C1.

In an embodiment, the charging circuit 20 includes: a power battery 11, a positive electrode interface 14, a negative electrode interface 15, an N-phase bridge arm 12, and an N-phase winding 13 in a one-to-one correspondence with the N-phase bridge arm 12, wherein each phase winding is connected to a midpoint of the corresponding bridge arm.

The positive electrode of the power battery 11 is connected to the first bus terminal of the N-phase bridge arm 12, the first bus terminal is connected to the positive electrode interface 14, and the negative electrode of the power battery 11 is connected to the second bus terminal of the N-phase bridge arm 12.

The positive electrode interface 14 is configured to connect to the first terminal of the charging gun capacitor C1.

The negative electrode interface 15 is connected to the midpoint of any bridge arm, and the negative electrode interface 15 is configured to connect to the second terminal of the charging gun capacitor C1.

The positive electrode interface 14 and the negative electrode interface 15 are configured to connect to the charging gun to realize the input or output of electric energy.

Before the charging gun charges the power battery 11, the power battery 11 needs to be discharged to pre-charge the charging gun capacitor C1.

The first terminal of each phase winding is connected to the midpoint of the corresponding bridge arm, the second terminal of each phase winding is jointly connected to form the neutral point of the N-phase winding 13, and the negative electrode interface 15 is connected to the first terminal of any phase winding.

According to the above technical solution, the charging circuit 20 includes a power battery 11, a positive electrode interface 14, a negative electrode interface 15, an N-phase bridge arm 12, and an N-phase winding 13 in a one-to-one correspondence with the N-phase bridge arm 12. Each phase winding is connected to the midpoint of the corresponding bridge arm. The positive electrode of the power battery 11 is connected to the first bus terminal of the N-phase bridge arm 12, the first bus terminal is connected to the positive electrode interface 14, and the negative electrode of the power battery 11 is connected to the second bus terminal of the N-phase bridge arm 12. The positive electrode interface 14 is configured to connect to the first terminal of the charging gun capacitor C1. The negative electrode interface 15 is connected to the midpoint of any bridge arm, and the negative electrode interface 15 is configured to connect to the second terminal of the charging gun capacitor C1. By arranging any one of the N-phase bridge arm 12 as a switch at the interface, since a plurality of bridge arms are arranged in the N-phase bridge arm 12, each charging will conduct any bridge arm, and the plurality of bridge arms will jointly accumulate the number of charging times, thereby sharing the risk of sintering and reducing the occurrence of sintering phenomena.

In an embodiment, the charging circuit 20 further includes:
a controller, and the controller is connected to the N-phase bridge arm 12. The controller may be a Microcontroller Unit (MCU).

The controller is configured to control the N-phase bridge arm 12 so that the power battery 11 charges the charging gun capacitor C1 through the N-phase winding 13 and the N-phase bridge arm 12 in a step-down mode.

When a large capacitor is arranged in the charging pile, after the charging port is connected to the charging pile, the charging gun capacitor C1 is pre-charged to generate a pre-charging current, which may cause sintering of the switching device.

During the pre-charging process, the charging gun capacitor C1, N-phase winding 13, and N-phase bridge arm 12 form a step-down circuit, and the power battery 11 is stepped down by the step-down circuit, and the charging gun capacitor C1 is charged during the step-down process. The controller controls the high-frequency rotational switching of the conduction states of the lower bridge arm in the N-phase bridge arm 12, and the switching control is configured to disconnect the conducting lower bridge arm before the pre-charging current reaches a dangerous value, so as to charge the charging gun capacitor C1 with a small current at high frequency until it is fully charged.

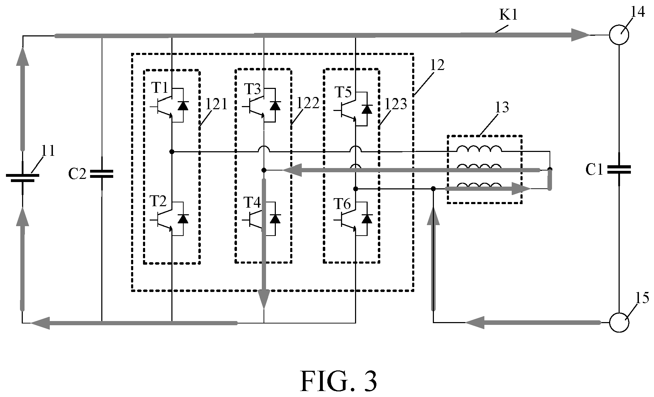

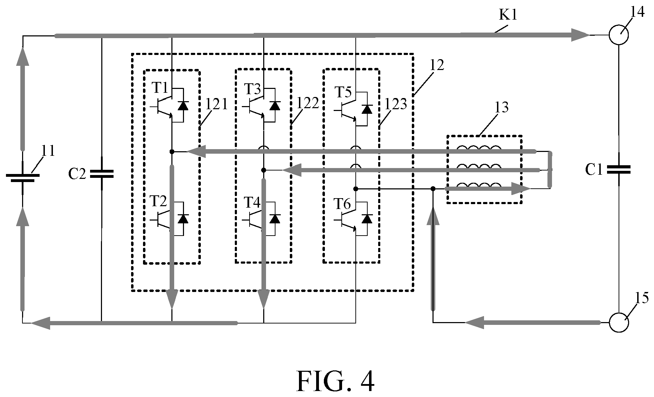

In an embodiment, referring to FIGS. 3 and 4, the N-phase bridge arm 12 is a three-phase bridge arm and the N-phase winding 13 is a three-phase winding.

The controller is configured to control the three-phase bridge arm to cyclically be in a first state, a second state, a third state, and a fourth state in sequence, so that the power battery 11 charges the charging gun capacitor C1 in a step-down mode.

In the first state, the upper bridge arms in the three-phase bridge arm are all disconnected, the lower bridge arm in the bridge arm connected to the negative electrode interface 15 is disconnected, one of the lower bridge arms in the bridge arm not connected to the negative electrode interface 15 is conducting, and the other lower bridge arm in the bridge arm not connected to the negative electrode interface 15 is disconnected.

In the second state, the upper bridge arms in the three-phase bridge arm are all disconnected, and the lower bridge arms in the three-phase bridge arm are all disconnected.

In the third state, the upper bridge arms in the three-phase bridge arm are all disconnected, the lower bridge arm in the bridge arm connected to the negative electrode interface 15 is disconnected, and the lower bridge arms in the bridge arm not connected to the negative electrode interface 15 are all conducting.

In the fourth state, the upper bridge arms in the three-phase bridge arm are all disconnected, and the lower bridge arms in the three-phase bridge arm are all disconnected.

For example, referring to FIGS. 3 and 4, the N-phase bridge arm 12 is a three-phase bridge arm, specifically the N-phase bridge arm 12 includes a first bridge arm 121, a second bridge arm 122, and a third bridge arm 123. The N-phase winding 13 is a three-phase winding, specifically the N-phase winding 13 includes a first phase winding, a second phase winding, and a third phase winding. The first bridge arm 121 is connected to the first phase winding, the second bridge arm 122 is connected to the second phase winding, and the third bridge arm 123 is connected to the third phase winding. The negative electrode interface 15 is connected to the midpoint of the third bridge arm 123, that is, the negative electrode interface 15 is connected to the first terminal of the third phase winding.

The first bridge arm 121 includes a first switch transistor T1 and a second switch transistor T2. The second bridge arm 122 includes a third switch transistor T3 and a fourth switch transistor T4. The third bridge arm 123 includes a fifth switch transistor T5 and a sixth switch transistor T6. The first switch transistor T1, the third switch transistor T3, and the fifth switch transistor T5 form the upper bridge arm of the N-phase bridge arm 12. The second switch transistor T2, the fourth switch transistor T4, and the sixth switch transistor T6 form the lower bridge arm of the N-phase bridge arm 12.

The drains of the first switch transistor T1, the third switch transistor T3, and the fifth switch transistor T5 are all connected to the first bus terminal. The sources of the second switch transistor T2, the fourth switch transistor T4, and the sixth switch transistor T6 are all connected to the second bus terminal. The source of the first switch transistor T1 is connected to the drain of the second switch transistor T2, and the source of the first switch transistor T1 and the drain of the second switch transistor T2 are connected to the first phase winding. The source of the third switch transistor T3 is connected to the drain of the fourth switch transistor T4, and the source of the third switch transistor T3 and the drain of the fourth switch transistor T4 are connected to the second phase winding. The source of the fifth switch transistor T5 is connected to the drain of the sixth switch transistor T6, and the source of the fifth switch transistor T5 and the drain of the sixth switch transistor T6 are connected to the third phase winding.

In the first state, referring to FIG. 3, the upper bridge arms in the three-phase bridge arm are the first switch transistor T1, the third switch transistor T3, and the fifth switch transistor T5, respectively, the lower bridge arm in the bridge arm connected to the negative electrode interface 15 is the sixth switch transistor T6, one of the lower bridge arms in the bridge arm not connected to the negative electrode interface 15 may be, for example, the fourth switch transistor T4, and the other lower bridge arm in the bridge arm not connected to the negative electrode interface 15 is the fifth switch transistor T5. That is, in the first state, the first switch transistor T1, the second switch transistor T2, the third switch transistor T3, the fifth switch transistor T5, and the sixth switch transistor T6 are all disconnected, and the fourth switch transistor T4 is conducting.

In the second state, that is, the first switch transistor T1, the second switch transistor T2, the third switch transistor T3, the fourth switch transistor T4, the fifth switch transistor T5, and the sixth switch transistor T6 are all disconnected.

In the third state, referring to FIG. 4, the upper bridge arms in the three-phase bridge arm are the first switch transistor T1, the third switch transistor T3, and the fifth switch transistor T5, respectively, the lower bridge arm in the bridge arm connected to the negative electrode interface 15 is the sixth switch transistor T6, and the lower bridge arms in the bridge arm not connected to the negative electrode interface 15 are the second switch transistor T2 and the fourth switch transistor T4. That is, in the second state, the first switch transistor T1, the third switch transistor T3, the fifth switch transistor T5, and the sixth switch transistor T6 are all disconnected, and the second switch transistor T2 and the fourth switch transistor T4 are conducting.

In the fourth state, that is, the first switch transistor T1, the second switch transistor T2, the third switch transistor T3, the fourth switch transistor T4, the fifth switch transistor T5, and the sixth switch transistor T6 are all disconnected.

The switch transistor may be a thyristor.

In the first state, the pre-charging current flows out from the positive electrode of the power battery 11, is charged into the charging gun capacitor C1, and then returns to the negative electrode of the power battery 11 through the second phase winding and the fourth switch transistor T4. After a very short time, the fourth switch transistor T4 is disconnected before the pre-charging current increases sharply, that is, the second state. In the third state, the pre-charging current flows out from the positive electrode of the power battery 11, is charged into the charging gun capacitor C1, and then returns to the negative electrode of the power battery 11 through the second phase winding and the fourth switch transistor T4, the first phase winding and the second switch transistor T2. After a very short time, the second switch transistor T2 and the fourth switch transistor T4 are disconnected before the pre-charging current increases sharply, that is, the fourth state. Then it returns to the first state, continues the cycle, and the originally sharply increased pre-charging current is chopped into a moderately increased pre-charging current by passing through the thyristor high-frequency switch, thus reducing the risk of sintering of the switching device during the pre-charged process.

In an embodiment, the charging circuit 20 further includes:
a switch K1, and the power battery 11 is connected to the charging interface 17 through the switch K1.

For example, the first bus terminal is connected to the positive electrode interface 14 through the switch K1.

For example, the switch K1 may comprise a relay.

In other embodiments, the controller may also be connected to the switch K1 for controlling the on-off state of the switch K1.

In an embodiment, when the pre-charging is completed, the charging gun performs DC charging on the power battery 11, and the controller is configured to:
control any lower bridge arm in the N-phase bridge arm 12 to be conducting, so that the charging gun charges the power battery 11.

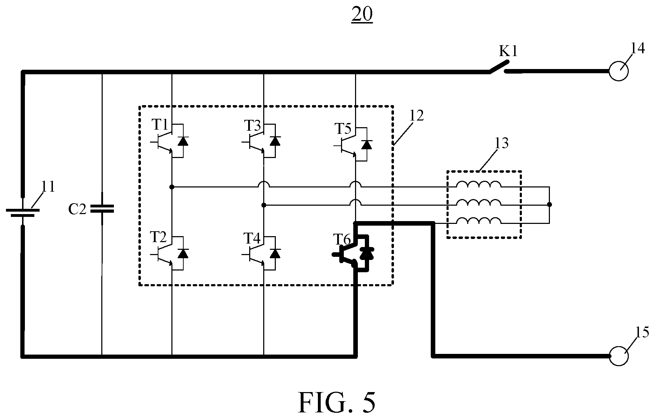

Referring to FIG. 5, any lower bridge arm in the N-phase bridge arm 12 is a sixth switch transistor T6, the controller controls the sixth switch transistor T6 to be conducting, and controls the other switch transistors to be disconnected, and the controller controls the switch K1 to be conducting, and the electric energy of the charging gun returns to the charging gun through the positive electrode interface 14, the switch K1, the power battery 11, the sixth switch transistor T6, and the negative electrode interface 15 sequentially, forming a charging circuit in which the charging gun charges the power battery 11.

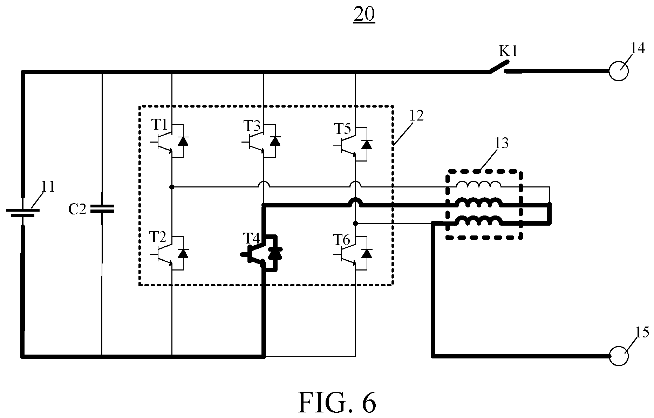

Referring to FIG. 6, any lower bridge arm in the N-phase bridge arm 12 is a fourth switch transistor T4, the controller controls the fourth switch transistor T4 to be conducting, and controls the other switch transistors to be disconnected, and the controller controls the switch K1 to be conducting, and the electric energy of the charging gun returns to the charging gun through the positive electrode interface 14, the switch K1, the power battery 11, the fourth switch transistor T4, the second phase winding, the third phase winding, and the negative electrode interface 15 sequentially, forming a charging circuit in which the charging gun charges the power battery 11.

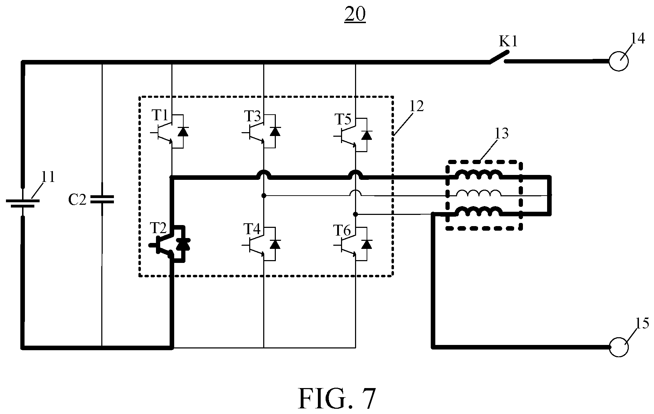

Referring to FIG. 7, any lower bridge arm in the N-phase bridge arm 12 is a second switch transistor T2, the controller controls the second switch transistor T2 to be conducting, and controls the other switch transistors to be disconnected, and the controller controls the switch K1 to be conducting, and the electric energy of the charging gun returns to the charging gun through the positive electrode interface 14, the switch K1, the power battery 11, the second switch transistor T2, the first phase winding, the third phase winding, and the negative electrode interface 15 sequentially, forming a charging circuit in which the charging gun charges the power battery 11.

In the process of charging the power battery 11 by the charging gun, the above three states can be switched, and the second switch transistor T2, the fourth switch transistor T4, and the sixth switch transistor T6 take turns to bear the charging current, thereby prolonging service life of the charging circuit 20.

In an embodiment, the charging circuit 20 further includes:
a bus capacitor C2, and one terminal of bus capacitor C2 is connected to the first bus terminal of the N-phase bridge arm 12, and a second terminal of the bus capacitor C2 is connected to the second bus terminal of the N-phase bridge arm 12.

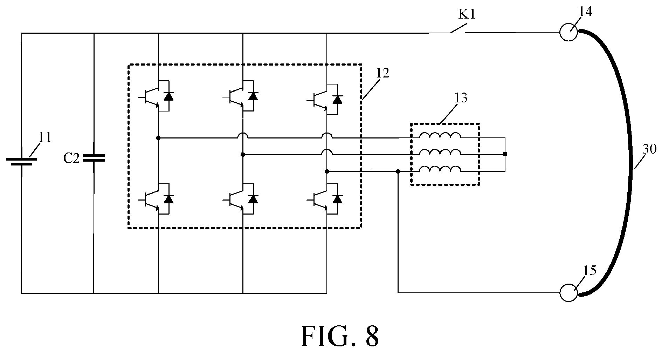

In an embodiment, referring to FIG. 8, in order to further avoid the risk of sintering present in the switch K1 or the N-phase bridge arm 12, the charging circuit 20 further includes:
a controller.

The controller is configured to control a battery cover driving device to drive a battery cover 30 to cover the charging interface 17, that is, the positive electrode interface 14 and the negative electrode interface 15, when the switch K1 is sintered.

When sintering of the switch K1 or the N-phase bridge arm 12 occurs, the controller controls a battery cover driving device to drive a battery cover 30 to cover the positive electrode interface 14 and the negative electrode interface 15, and even gives an alarm.

In an embodiment, the N-phase winding multiplexes the multiphase coil of the motor, and the N-phase bridge arm multiplexes the N-phase bridge arm of the motor controller.

Specifically, the motor includes a driving motor or an air-conditioning compressor, and the motor controller includes a motor controller corresponding to the driving motor, or a motor controller corresponding to the air-conditioning compressor.

That is, the N-phase winding and the N-phase bridge arm in the charging circuit 20 can be shared with the existing motor and the motor controller on the vehicle, and there is no need to add them, thereby saving space and resources.

In another embodiment of the present disclosure, the N-phase bridge arm may also be an N-phase bridge arm in an inverter on the vehicle, and the N-phase winding may be an N-phase winding in a motor on the vehicle.

An embodiment of the present disclosure also provides a vehicle 10, referring to FIG. 1, the vehicle includes the above-described charging circuit 20.

Preferred embodiments of the present disclosure have been described in detail above with reference to the accompanying drawings, but the present disclosure is not limited to the specific details in the above-described embodiments, and various simple modifications can be made to the technical solutions of the present disclosure within the scope of the technical concept of the present disclosure, and these simple modifications all fall within the scope of protection of the present disclosure.

In addition, it will be noted that the specific technical features described in the above-described detailed description can be combined in any suitable manner without contradiction. In order to avoid unnecessary repetition, various possible combinations of the present disclosure will not be described separately.

In addition, various different embodiments of the present disclosure may be arbitrarily combined, and the same will be regarded as the contents disclosed in the present disclosure as long as they do not violate the concept of the present disclosure.

## Claims

1. A charging circuit (20), the charging circuit (20) comprising a power battery (11), a charging interface (17) and at least one inductor (16), and the power battery (11), the at least one inductor (16) and the charging interface (17) being sequentially connected;
the charging interface (17) being configured to connect to the charging gun capacitor (C1); and
the power battery (11) being adapted to pre-charge the charging gun capacitor (C1) through the at least one inductor (16).

2. The charging circuit (20) according to claim 1, wherein the charging circuit (20) further comprises at least one switch unit (18), the power battery (11), the at least one inductor (16), the at least one switch unit (18) and the charging interface (17) are sequentially connected, and the power battery (11) is adapted to pre-charge the charging gun capacitor (C1) through the at least one inductor (16) and the at least one switch unit (18).

3. The charging circuit (20) according to claim 2, wherein the at least one switch unit (18) comprises an N-phase bridge arm (12), and the at least one inductor (16) comprises an N-phase winding (13) in a one-to-one correspondence with the N-phase bridge arm (12), wherein each phase winding is connected to the midpoint of the corresponding bridge arm, and N ≥ 1;
the positive electrode of the power battery (11) is connected to a first bus terminal of the N-phase bridge arm (12), the first bus terminal is connected to the charging interface (17), and the negative electrode of the power battery (11) is connected to a second bus terminal of the N-phase bridge arm (12); and
the charging interface (17) is also connected to the midpoint of any bridge arm.

4. The charging circuit (20) according to claim 3, wherein the charging interface (17) comprises a positive electrode interface (14) and a negative electrode interface (15);
the positive electrode interface (14) is connected to the first bus terminal, and the positive electrode interface (14) is configured to connect to a first terminal of the charging gun capacitor (C1); and
the negative electrode interface (15) is connected to the midpoint of any bridge arm, and the negative electrode interface (15) is configured to connect to a second terminal of the charging gun capacitor (C1).

5. The charging circuit (20) according to claim 4, wherein,
the charging circuit (20) further comprises:
a controller, and the controller is connected to the N-phase bridge arm (12); and
the controller is configured to control the N-phase bridge arm (12) to cause the power battery (11) to charge the charging gun capacitor (C1) through the N-phase winding (13) and the N-phase bridge arm (12) in a step-down mode.

6. The charging circuit (20) according to claim 5, wherein the N-phase bridge arm (12) is a three-phase bridge arm, and the N-phase winding (13) is a three-phase winding;
the controller is configured to control the three-phase bridge arm to cyclically be in a first state, a second state, a third state, and a fourth state in sequence, to cause the power battery (11) to charge the charging gun capacitor (C1) in a step-down mode;
wherein, in the first state, the upper bridge arms in the three-phase bridge arm are all disconnected, the lower bridge arm in the bridge arm connected to the negative electrode interface (15) is disconnected, one of the lower bridge arms in the bridge arm not connected to the negative electrode interface (15) is conducting, and the other lower bridge arm in the bridge arm not connected to the negative electrode interface (15) is disconnected;
in the second state, the upper bridge arms in the three-phase bridge arm are all disconnected, and the lower bridge arms in the three-phase bridge arm are all disconnected;
in the third state, the upper bridge arms in the three-phase bridge arm are all disconnected, the lower bridge arm in the bridge arm connected to the negative electrode interface (15) is disconnected, and the lower bridge arms in the bridge arm not connected to the negative electrode interface (15) are all conducting; and
in the fourth state, the upper bridge arms in the three-phase bridge arm are all disconnected, and the lower bridge arms in the three-phase bridge arm are all disconnected.

7. The charging circuit (20) according to claim 5 or 6, wherein the controller is configured to:
control any lower bridge arm in the N-phase bridge arm (12) to be conducting, to cause the charging gun to charge the power battery (11).

8. The charging circuit (20) according to any one of claims 3 to 7, wherein the charging circuit (20) further comprises:
a bus capacitor (C2), and one terminal of the bus capacitor (C2) is connected to a first bus terminal of the N-phase bridge arm (12), and a second terminal of the bus capacitor (C2) is connected to a second bus terminal of the N-phase bridge arm (12).

9. The charging circuit (20) according to any one of claims 1 to 8, wherein the charging circuit (20) further comprises:
a switch (K1), and the power battery (11) is connected to the charging interface (17) through the switch (K1).

10. The charging circuit (20) according to claim 9, wherein the charging circuit (20) further comprises: a controller,
the controller is configured to control a battery cover driving device to drive a battery cover (30) to cover the charging interface (17), when the switch (K1) is sintered.

11. The charging circuit (20) according to any one of claims 3 to 10, wherein the N-phase winding (13) multiplexes a multiphase coil of a motor, and the N-phase bridge arm (12) multiplexes a multiphase bridge arm of a motor controller.

12. The charging circuit (20) according to claim 11, wherein the motor comprises a driving motor or an air-conditioning compressor, and the motor controller comprises a motor controller corresponding to the driving motor or a motor controller corresponding to the air-conditioning compressor.

13. A vehicle (10), comprising the charging circuit (20) according to any one of claims 1 to 12.
